# EUROPÄISCHE PATENTANMELDUNG

(11) **EP 4 847 567 A1**
(43) Veröffentlichungstag der Anmeldung: **02.12.2026**
(21) Anmeldenummer: 25179602.5
(22) Anmeldetag: 28.05.2025
(51) Int. Cl.: C08L 101/06

(54) **BESCHLEUNIGER FÜR DIE VERNETZUNG VON 1,3-KETOESTERN MIT ALDIMINEN**

(71) Anmelder: Sika Technology AG, 6340 Baar (CH)
(72) Erfinder: HÄBERLE, Hans, 8048 Zürich (CH); SCHEURER, Rouven, 8048 Zürich (CH); KRAMER, Andreas, 8048 Zürich (CH)
(74) Vertreter: Sika Patent Attorneys

(57) **Zusammenfassung**

Gegenstand der Erfindung ist die Verwendung einer Carbonsäure **CA,** ausgewählt aus primären aliphatischen Carbonsäuren, sekundären aliphatischen Carbonsäuren und Aminobenzoesäuren, als Beschleuniger für die Aushärtung einer härtbaren Zusammensetzung enthaltend Ketoestergruppen der Formel (I) und aromatische Aldimingruppen.

Die Carbonsäure **CA** ermöglicht eine beschleunigte Aushärtung weitgehend ohne negative Auswirkungen auf die ausgehärtete Zusammensetzung, insbesondere ohne Beeinträchtigung der Hitzestabilität.

## Beschreibung

### Technisches Gebiet

Die Erfindung betrifft bei Raumtemperatur härtbare elastische oder zähelastische Zusammensetzungen mit 1,3-Ketoestergruppen und Aldimingruppen.

### Stand der Technik

Bei Raumtemperatur härtbare Polymerzusammensetzungen mit elastischen oder zähelastischen Eigenschaften und ihre Verwendung in Beschichtungen, Klebstoffen und Dichtstoffen sind bekannt. Typischerweise enthalten diese Reaktivgruppen wie Epoxidgruppen, Isocyanatgruppen oder Organosilangruppen. Diese bekannten Systeme weisen aber eine Reihe von Nachteilen auf. Epoxidharz-Zusammensetzungen sind typischerweise kaum dehnbar, neigen bei grossflächiger Applikation aufgrund von Blushing zu unschönen und teilweise klebrigen Oberflächen und die darin enthaltenen Epoxidharze und Amine sind oft gesundheitsschädlich. Isocyanate sind toxische und feuchteempfindliche Substanzen, deren Handhabung viel technisches Knowhow und Schutzmassnahmen erfordert. Zusammensetzungen mit Organosilangruppen sind ebenfalls empfindlich gegen Feuchtigkeit, zudem werden bei der Aushärtung flüchtige Alkohole freigesetzt, wodurch unerwünschte Emissionen entstehen, und die Zähigkeit der ausgehärteten Produkte ist meist unbefriedigend.

Seit neuerem beschrieben sind Polymerzusammensetzungen mit 1,3-Ketoestergruppen, insbesondere Acetoacetatgruppen, welche bei Raumtemperatur mit aromatischen Aldiminen zuverlässig aushärten und zähelastische bis elastische Eigenschaften ermöglichen. Diese Zusammensetzungen härten eher langsam aus.

### Darstellung der Erfindung

Aufgabe der Erfindung ist es, geeignete Beschleuniger für die Aushärtung von Zusammensetzungen mit 1,3-Ketoestergruppen und aromatischen Aldimingruppen ohne negative Auswirkungen auf das ausgehärtete Polymer zur Verfügung zu stellen.

Überraschenderweise wird diese Aufgabe mit der Verwendung einer Carbonsäure **CA** wie in Anspruch 1 beschrieben gelöst. Primäre oder sekundäre aliphatische Carbonsäuren und Aminobenzoesäuren ermöglichen überraschenderweise eine gute Beschleunigung der Aushärtung weitgehend ohne Auswirkungen auf die ausgehärtete Zusammensetzung. Im Gegensatz dazu bewirken Säuren wie Sulfonsäuren oder Phosphorsäuren kaum eine Beschleunigung der Aushärtung. Und tertiäre aliphatische Carbonsäuren wie beispielsweise Neodecansäure, sowie aromatische Carbonsäuren ohne Amingruppen wie beispielsweise Benzoesäure oder Salicylsäure zeigen zwar eine beschleunigende Wirkung, beeinträchtigen aber die Hitzestabilität der ausgehärteten Zusammensetzung. Dies zeigt sich insbesondere durch Blasenbildung nach Lagerung während 7 Tagen bei 80 °C der ausgehärteten Zusammensetzung, wie in den Beispielen in Tabelle 1 ersichtlich. Besonders geeignet als Beschleuniger ist überraschenderweise Lävulinsäure. Lävulinsäure ist gut verfügbar, von mildem Geruch und sehr niedrigschmelzend, was für die Handhabung vorteilhaft ist, und hat eine sehr gute Beschleunigungswirkung ohne negative Auswirkungen auf die ausgehärtete Zusammensetzung. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung einer Carbonsäure **CA,** ausgewählt aus primären aliphatischen Carbonsäuren, sekundären aliphatischen Carbonsäuren und Aminobenzoesäuren, als Beschleuniger für die Aushärtung einer härtbaren Zusammensetzung enthaltend Ketoestergruppen der Formel (I) und aromatische Aldimingruppen, 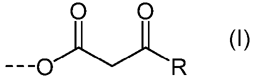 wobei R für einen einwertigen Kohlenwasserstoffrest mit 1 bis 6 C-Atomen steht.

Eine gestrichelte Linie in den Formeln in diesem Dokument stellt jeweils die Bindung zwischen einem Substituenten und dem zugehörigen Molekülrest dar.

Als "aliphatisch" wird eine Carbonsäure bezeichnet, deren Carboxylgruppe an einen aliphatischen oder cycloaliphatischen Rest gebunden ist.

Als "primär" wird eine aliphatische Carbonsäure bezeichnet, deren Carboxylgruppe an ein C-Atom mit zwei Wasserstoffatomen gebunden ist.

Als "sekundär" wird eine aliphatische Carbonsäure bezeichnet, deren Carboxylgruppe an ein C-Atom mit einem einzigen Wasserstoffatom gebunden ist.

Als "tertiär" wird eine aliphatische Carbonsäure bezeichnet, deren Carboxylgruppe an ein C-Atom ohne Wasserstoffatome gebunden ist, wie beispielsweise im Fall von Pivalinsäure (Neopentansäure).

Als "aromatische Aldimingruppe" wird eine Gruppierung der Formel --N=CH-- bezeichnet, deren Kohlenstoffatom direkt an einen aromatischen oder heteroaromatischen Ring gebunden ist und die selbst nicht Teil eines heteroaromatischen Ringsystems ist.

Als "Molekulargewicht" wird die molare Masse (in Gramm pro Mol) eines Moleküls bezeichnet. Als "mittleres Molekulargewicht" wird das Zahlenmittel des Molekulargewichts Mₙ einer polydispersen Mischung von oligomeren oder polymeren Molekülen bezeichnet. Es wird mittels Gelpermeationschromatographie (GPC) gegen Polystyrol als Standard bestimmt.

Als "Equivalentgewicht" wird die Masse eines Moleküls oder einer Zusammensetzung pro Molequivalent einer funktionellen Gruppe bezeichnet (in Gramm pro Equivalent).

Mit "Poly" beginnende Substanznamen wie Polyol oder Polyaldimin bezeichnen Substanzen, die formal zwei oder mehr der in ihrem Namen vorkommenden funktionellen Gruppen pro Molekül enthalten.

Als "zähelastisch" werden Produkte mit einer Shore Härte ab etwa D 50 und einer Bruchdehnung von mindestens 10 % bezeichnet.

Als "Weichmacher" wird eine bei Raumtemperatur flüssige Substanz bezeichnet, welche nach der Aushärtung unverändert in der Zusammensetzung verbleibt und die ausgehärtete Zusammensetzung weicher macht.

Als "Verdünner" wird eine Substanz bezeichnet, mit der härtbaren Zusammensetzung mischbar ist, die Viskosität senkt und bei der Aushärtung nicht ins entstehende Polymer eingebunden wird.

Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben ist. Die Begriffe "Masse" und "Gewicht" werden im vorliegenden Dokument synonym benutzt.

Bevorzugt weist die Carbonsäure **CA** 2 bis 20, besonders bevorzugt 3 bis 18, insbesondere 5 bis 12, C-Atome und gegebenenfalls Heteroatome auf.

Als Carbonsäure **CA** geeignete Aminobenzoesäuren sind insbesondere 2-Aminobenzoesäure, 3-Aminobenzoesäure oder 4-Aminobenzoesäure, bevorzugt 4-Aminobenzoesäure.

Bevorzugt ist die Carbonsäure **CA** ausgewählt aus der Liste bestehend aus Milchsäure, Lävulinsäure, Heptansäure, Octansäure, Nonansäure, Decansäure, Undecansäure, Laurinsäure, Stearinsäure, Isostearinsäure und 4-Aminobenzoesäure.

Ganz besonders bevorzugt ist Lävulinsäure. Lävulinsäure ist von mildem Geruch, nahe bei Raumtemperatur flüssig und ermöglicht eine sehr gute Beschleunigung der Aushärtung ohne nennenswerte Auswirkungen auf die mechanischen Eigenschaften und die Stabilität gegenüber Hitze oder Feuchtigkeit nach der Aushärtung.

Bevorzugt wird die Carbonsäure **CA** in der härtbaren Zusammensetzung in einer Menge von 0.1 bis 10, bevorzugt 0.5 bis 5, insbesondere 1 bis 3, Gewichtsteile Carbonsäure **CA,** bezogen auf 100 Gewichtsteile der Summe aller Bestandteile mit aromatischen Aldimingruppen und mit Ketoestergruppen der Formel (I), eingesetzt.

Die härtbare Zusammensetzung enthält Ketoestergruppen der Formel (I), 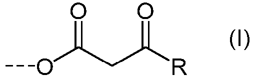 wobei R für einen einwertigen Kohlenwasserstoffrest mit 1 bis 6 C-Atomen steht.

Bevorzugt umfasst die härtbare Zusammensetzung Verbindungen mit mindestens zwei Ketoestergruppen der Formel (I), bevorzugt mit zwei bis sechs, besonders bevorzugt mit zwei bis vier, insbesondere mit zwei bis drei, Ketoestergruppen der Formel (I).

Bevorzugt steht R in Formel (I) für einen Alkylrest mit 1 bis 6 C-Atomen oder für Phenyl, besonders bevorzugt für Methyl, Ethyl, Propyl, Isopropyl, Butyl oder Phenyl.

Am meisten bevorzugt steht R für Methyl und die Ketoestergruppen der Formel (I) sind somit Acetoacetatgruppen. Verbindungen mit Acetoacetatgruppen sind besonders einfach zugänglich und ermöglichen Zusammensetzungen mit besonders schneller Aushärtung.

Verbindungen mit Ketoestergruppen der Formel (I) sind insbesondere erhältlich durch die Umesterung von Alkoholen, insbesondere Polyolen, mit mindestens einem Ketoester der Formel 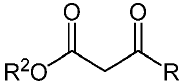 unter destillativer Entfernung des Alkohols R²OH, wobei R² für C₁₋₆ Alkyl steht und R die bereits genannten Bedeutungen aufweist. Bevorzugt steht R² für Ethyl oder tert-Butyl.

Die härtbare Zusammensetzung enthält weiterhin aromatische Aldimingruppen.

Bevorzugt umfasst die härtbare Zusammensetzung Verbindungen mit mindestens zwei aromatischen Aldimingruppen, bevorzugt mit zwei bis vier, insbesondere mit zwei bis drei, aromatischen Aldimingruppen.

Geeignet als aromatische Aldimingruppen sind insbesondere Aldimingruppen der Formel (II) oder Aldimingruppen der Formel (III), 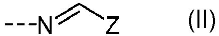 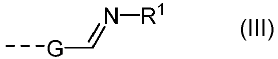 wobei
Z für einen aromatischen oder heteroaromatischen fünf- oder sechsgliedrigen Ring steht, der gegebenenfalls substituiert und/oder anelliert ist und insgesamt 4 bis 25 C-Atome umfasst,
R¹ für einen einwertigen, gegebenenfalls Ether-Sauerstoff enthaltenden aliphatischen, cycloaliphatischen oder arylaliphatischen Kohlenwasserstoffrest mit 1 bis 13 C-Atomen steht, und
G für einen zweiwertigen aromatischen oder heteroaromatischen Ring steht, der gegebenenfalls substituiert und/oder anelliert ist und insgesamt 4 bis 18 C-Atome umfasst.

Besonders bevorzugt sind Aldimingruppen der Formel (II). Diese sind insbesondere erhältlich, indem ein primäres Amin mit einem aromatischen Aldehyd wie beispielsweise Benzaldehyd unter Freisetzung von Wasser umgesetzt wird.

Bevorzugt steht Z in Formel (II) für einen Phenylrest, einen Naphthylrest, einen Furylrest, einen Pyridinrest, einen Pyrrolrest, einen Indolrest oder einen Thiophenrest, insbesondere einen Phenylrest, Naphthylrest oder Furylrest, wobei diese Reste gegebenenfalls substituiert sind, insbesondere mit Alkyl- oder Alkoxy- oder Nitro- oder Estergruppen.

Insbesondere ist Z ausgewählt aus der Liste bestehend aus Phenyl, 2-Methylphenyl, 3-Methylphenyl, 4-Methylphenyl, 4-Ethylphenyl, 4-Isopropylphenyl, 4-tert-Butylphenyl, 4-C₁₀₋₁₄-Alkylphenyl, 2,5-Dimethylphenyl, 2-Methoxyphenyl, 3-Methoxyphenyl, 4-Methoxyphenyl, 2-Ethoxyphenyl, 3-Ethoxyphenyl, 4-Ethoxyphenyl, 4-Propoxyphenyl, 4-Isopropoxyphenyl, 4-Butoxyphenyl, 4-Pentoxyphenyl, 4-Decyloxyphenyl, 4-Dodecyloxyphenyl, 2,3-Dimethoxyphenyl, 2,4-Dimethoxyphenyl, 2,5-Dimethoxyphenyl, 3,4-Dimethoxyphenyl, 3,5-Dimethoxyphenyl, 2,4,6-Trimethylphenyl, 2,4,5-Trimethoxyphenyl, 2,4,6-Trimethoxyphenyl, 3,4,5-Trimethoxyphenyl, 4-Methoxycarbonylphenyl, 4-Ethoxycarbonylphenyl, 3-Nitrophenyl, 1-Naphthyl, 2-Naphthyl, 2-Furyl und 5-Methyl-2-furyl.

Davon bevorzugt ist Phenyl, 4-Methylphenyl, 4-Ethylphenyl, 4-Isopropylphenyl, 4-Isobutylphenyl, 2-Furyl oder 5-Methyl-2-furyl.

Besonders bevorzugt steht Z für Phenyl oder 4-Methylphenyl. Solche Aldimingruppen der Formel (II) sind abgeleitet von Benzaldehyd bzw. 4-Tolualdehyd. Sie sind technisch wie kommerziell besonders gut zugänglich und ermöglichen eine schnelle Aushärtung.

Ebenfalls möglich sind Aldimingruppen der Formel (III). Diese sind insbesondere erhältlich, indem ein funktioneller aromatischer Aldehyd wie beispielsweise 5-Hydroxymethylfurfural oder ein ethoxylierter Salicylaldehyd oder ein Reaktionsprodukt davon mit einem primären Amin der Formel R¹-NH₂ unter Freisetzung von Wasser umgesetzt wird.

Bevorzugt steht R¹ für Butyl, Hexyl, Octyl, 2-Ethylhexyl, 2-Methoxyethyl, 2-Ethoxyethyl, 3-Methoxypropyl, 3-Ethoxypropyl oder Benzyl, insbesondere für Butyl oder Benzyl.

Bevorzugt steht G für 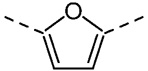 oder 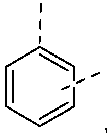 besonders bevorzugt für 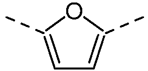 oder 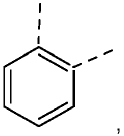 insbesondere für

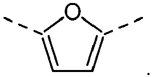

Bevorzugt umfasst die härtbare Zusammensetzung Verbindungen mit mindestens zwei Ketoestergruppen der Formel (I) und Verbindungen mit mindestens zwei aromatischen Aldimingruppen.

Besonders bevorzugt umfasst die härtbare Zusammensetzung Verbindungen mit zwei bis sechs, bevorzugt zwei bis vier, insbesondere zwei bis drei, Ketoestergruppen der Formel (I), und Verbindungen mit zwei bis vier, insbesondere zwei bis drei, aromatischen Aldimingruppen.

Bevorzugt liegt das Verhältnis der Anzahl Ketoestergruppen der Formel (I) zur Anzahl aromatische Aldimingruppen in der härtbaren Zusammensetzung im Bereich von 1 bis 4, bevorzugt 1.5 bis 3, insbesondere 1.8 bis 2.7. Eine solche Zusammensetzung ermöglicht eine besonders hohe Festigkeit bei guter Dehnbarkeit.

Bevorzugt umfasst die härtbare Zusammensetzung mindestens ein Polymer mit einem mittleren Molekulargewicht Mₙ von 800 bis 20'000 g/mol, wobei das Polymer mindestens zwei Ketoestergruppen der Formel (I) oder mindestens zwei aromatischen Aldimingruppen enthält. Eine solche Polymerzusammensetzung ermöglicht ausgehärtete Produkte mit besonders guter Dehnbarkeit.

In einer bevorzugten Ausführungsform umfasst die härtbare Zusammensetzung
- mindestens ein Polymer mit mindestens zwei Ketoestergruppen der Formel (I) und einem Ketoester-Equivalentgewicht von mindestens 340 g/eq, und
- mindestens eine Verbindung mit mindestens zwei aromatischen Aldimingruppen und einem Aldimin-Equivalentgewicht von 111 bis 350 g/eq.

Bevorzugt sind Polymere mit mindestens zwei Ketoestergruppen der Formel (I) mit einem Ketoester-Equivalentgewicht von 340 bis 2'500 g/eq. Bevorzugt weist ein solches Polymer ein mittleres Molekulargewicht Mₙ von 800 bis 5'000 g/mol auf.

Bevorzugt sind bei Raumtemperatur flüssige Polymere mit mindestens zwei Ketoestergruppen der Formel (I).

Bevorzugt ist ein Polymer mit mindestens zwei Ketoestergruppen der Formel (I) ein Umsetzungsprodukt aus der Umesterung von mindestens einem polymere Polyol. Bevorzugt sind die Acetoacetate von
- amorphen, gesättigten, bei Raumtemperatur flüssigen Polyesterdiolen oder Polyestertriolen, insbesondere aus der Umsetzung von Dicarbonsäuren wie insbesondere Bernsteinsäure, Glutarsäure, Adipinsäure, Pimelinsäure, Korksäure, Azelainsäure, Sebacinsäure oder Dodecandicarbonsäure, mit Alkoholen wie insbesondere 1,2-Ethandiol, Diethylenglykol, 1,2-Propandiol, 1,3-Propandiol, 2-Methyl-1,3-propandiol, Dipropylenglykol, 1,4-Butandiol, 1,5-Pentandiol, 3-Methyl-1,5-pentandiol, 1,6-Hexandiol, Neopentylglykol, 1,3-Cyclohexandimethanol, 1,4-Cyclohexandimethanol, Trimethylolpropan, Isosorbid oder Glycerin,
- amorphen Polyesterpolyolen aus der Veresterung einer Dimerfettsäure oder Trimerfettsäure oder eines Dimerfettalkohols oder Trimerfettalkohols,
- Rizinusöl oder Polyesterpolyolen aus der Umsetzung von Rizinusöl, wie insbesondere Setathane^{®} D 1145 oder Setathane^{®} D 1150 (beide von Allnex),
- Polyetherpolyolen, insbesondere Poly(oxy-1,2-propylen)diolen oder Poly(oxy-1,2-propylen)triolen, wobei diese an den Kettenenden gegebenenfalls einen Gehalt bis zu 25 Gewichts-% an Oxy-1,2-ethylen-Einheiten enthalten können, Poly(oxy-1,3-propylen)diolen oder -triolen, oder Poly(oxy-1,4-butylen)diolen,
- Polyacrylatpolyolen,
- Polybutadienpolyolen,
- oder weiteren handelsüblichen bei Rumtemperatur flüssigen Polyolen.

Als Verbindung mit mindestens zwei aromatischen Aldimingruppen und einem Aldimin-Equivalentgewicht von 111 bis 350 g/eq geeignet sind insbesondere Umsetzungsprodukte von handelsüblichen primären Polyaminen mit mindestens einem aromatischen oder heteroaromatischen Aldehyd unter Freisetzung und Entfernung von Wasser.

Bevorzugt sind aliphatische oder cycloaliphatische primäre Polyamine, insbesondere ausgewählt aus der Liste bestehend aus 1,2-Ethandiamin, 1,2-Propandiamin, 1,3-Propandiamin, 1,4-Butandiamin, 1,5-Pentandiamin, 2,2-Dimethyl-1,3-propandiamin, 1,3-Pentandiamin (DAMP), 1,6-Hexandiamin, 1,5-Diamino-2-me-thylpentan (MPMD), 1,7-Heptandiamin, 1,8-Octandiamin, 2,5-Dimethyl-1,6-hexandiamin, 1,9-Nonandiamin, 2,2(4),4-Trimethyl-1,6-hexandiamin (TMD), 1,10-Decandiamin, 1,11-Undecandiamin, 2-Butyl-2-ethyl-1,5-pentandiamin (C11-Neodiamin), 1,12-Dodecandiamin, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, 1,3-Bis(aminomethyl)benzol (MXDA), Isophorondiamin (IPDA), 2(4)-Methyl-1,3-diaminocyclohexan, Bis(4-aminocyclohexyl)methan, 2,5(6)-Bis(aminomethyl)bicyclo[2.2.1]heptan (NBDA), 3(4),8(9)-Bis(aminomethyl)tricyclo[5.2.1.0^{2,6}]-decan (TCD-Diamin), 4,9-Dioxadodecan-1,12-diamin, 4,7,10-Trioxatridecan-1,13-diamin, Polyoxypropylendiaminen mit einem mittleren Molekulargewicht Mₙ von 200 bis 500 g/mol und Polyoxypropylentriaminen mit einem mittleren Molekulargewicht Mₙ von 300 bis 500 g/mol.

Bevorzugte Polyoxypropylendi- oder -triamine sind Jeffamine^{®} D-230, Jeffamine^{®} D-400 oder Jeffamine^{®} T-403 (alle von Huntsman), sowie entsprechende Typen von BASF oder Nitroil.

Als aromatischer oder heteroaromatischer Aldehyd bevorzugt sind Benzaldehyd, 2-Tolualdehyd, 3-Tolualdehyd, 4-Tolualdehyd, 4-Ethylbenzaldehyd, 4-Isopropylbenzaldehyd, 4-Isobutylbenzaldehyd, 4-C₁₀₋₁₄-Alkylbenzaldehyd, Salicylaldehyd, alkoxylierter Salicylaldehyd wie insbesondere 2-(2-Hydroxyethoxy)benzaldehyd, 3-Hydroxybenzaldehyd, 4-Hydroxybenzaldehyd, 2,5-Dimethylbenzaldehyd, 2-Methoxybenzaldehyd, 3-Methoxybenzaldehyd, 4-Methoxybenzaldehyd, 2-Ethoxybenzaldehyd, 3-Ethoxybenzaldehyd, 4-Ethoxybenzaldehyd, 4-Propoxybenzaldehyd, 4-Isopropoxybenzaldehyd, 4-Butoxybenzaldehyd, 4-Pentoxybenzaldehyd, 4-Decyloxybenzaldehyd, 4-Dodecyloxybenzaldehyd, 2,3-Dimethoxybenzaldehyd, 2,4-Dimethoxybenzaldehyd, 2,5-Dimethoxybenzaldehyd, 3,4-Dimethoxybenzaldehyd, 3,5-Dimethoxybenzaldehyd, 4-Hydroxy-3-methoxybenzaldehyd (Vanillin), 2,4,6-Trimethylbenzaldehyd, 2,4,5-Trimethoxybenzaldehyd, 2,4,6-Trimethoxybenzaldehyd, 3,4,5-Trimethoxybenzaldehyd, 4-Formylbenzoesäureester, insbesondere 4-Formylbenzoesäuremethylester oder 4-Formylbenzoesäureethylester, 3-Nitrobenzaldehyd, 1-Naphthaldehyd, 2-Naphthaldehyd, Furfural, 5-Methylfurfural oder 5-Hydroxymethylfurfural..

Besonders bevorzugt sind Benzaldehyd, die Tolualdehyde, 4-Ethylbenzaldehyd, 4-Isopropylbenzaldehyd, 4-Isobutylbenzaldehyd, Furfural, 5-Methylfurfural oder 5-Hydroxymethylfurfural, insbesondere Benzaldehyd, 4-Tolualdehyd, 4-Isopropylbenzaldehyd, Furfural oder 5-Methylfurfural.

Am meisten bevorzugt sind Benzaldehyd und 4-Tolualdehyd.

Besonders bevorzugte Verbindungen mit aromatischen Aldimingruppen sind ausgewählt aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzylidenpolyoxy-propylendiaminen mit mittlerem Molekulargewicht Mₙ von 350 bis 750 g/mol, und entsprechende Verbindungen abgeleitet von 4-Tolualdehyd, 4-Isopropylbenzaldehyd, Furfural oder 5-Methylfurfural anstelle von Benzaldehyd.

Bevorzugt umfasst eine solche härtbare Zusammensetzung zusätzlich mindestens eine weitere Verbindung mit mindestens zwei Ketoestergruppen der Formel (I).

Bevorzugte weitere Verbindungen mit mindestens zwei Ketoestergruppen der Formel (I) sind ausgewählt aus der Liste bestehend aus 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, 3-Methyl-1,5-pentandioldiacetoacetat, 2-Ethyl-1,3-hexandioldiacetoacetat, Isosorbid-diacetoacetat, 4,4'-Isopropyliden-bis(cyclohexanol)diacetoacetat, Polytetrahydrofuran-diacetoacetat mit mittlerem Molekulargewicht Mₙ von 350 bis 450 g/mol, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat und dem Triacetoacetat von propoxyliertem 1,1,1-Trimethylolpropan mit insgesamt einem mittleren Molekulargewicht Mₙ von 500 bis 750 g/mol.

In einer weiteren bevorzugten Ausführungsform umfasst die härtbare Zusammensetzung
- mindestens ein Polymer mit mindestens zwei aromatischen Aldimingruppen und einem Aldimin-Equivalentgewicht von mindestens 600 g/eq, und
- mindestens eine Verbindung mit mindestens zwei Ketoestergruppen der Formel (I) und einem Ketoester-Equivalentgewicht von 114 bis 1'700 g/eq.

Bevorzugt weist das Polymer mit mindestens zwei aromatischen Aldimingruppen und einem Aldimin-Equivalentgewicht von mindestens 600 g/eq ein Polyether-Rückgrat auf, insbesondere ein Poly(oxy-1,2-propylen)-Rückgrat, welches bis zu 25 Gewichts-%, bevorzugt bis zu 20 Gewichts-%, Oxy-1,2-ethylen-Einheiten bezogen auf das gesamte Polyether-Rückgrat enthalten kann, insbesondere an den Kettenenden.

Bevorzugt weist das Polymer mit mindestens zwei aromatischen Aldimingruppen ein mittleres Molekulargewicht Mₙ von 2'000 bis 20'000 g/mol, bevorzugt 2'500 bis 15'000 g/mol, insbesondere 4'000 bis 15'000 g/mol auf.

Bevorzugt weist das Polymer mit mindestens zwei aromatischen Aldimingruppen eine mittlere Aldimin-Funktionalität von 1.8 bis 3, bevorzugt 2 bis 3, auf.

In einer bevorzugten Ausführungsform der Erfindung ist das Polymer mit mindestens zwei aromatischen Aldimingruppen abgeleitet von einem Polyetheramin, insbesondere einem Polyoxypropylendiamin wie insbesondere Jeffamine^{®} D-2000 oder Jeffamine^{®} D-4000 (beide von Huntsman), oder einem Polyoxypropylentriamin wie Jeffamine^{®} T-5000 (von Huntsman), oder entsprechende Typen von BASF oder Nitroil, und einem aromatischen Aldehyd wie die bereits genannten, bevorzugt Benzaldehyd, Tolualdehyd, 4-Isopropylbenzaldehyd, Furfural oder 5-Methylfurfural, insbesondere Benzaldehyd.

In einer besonders bevorzugten Ausführungsform der Erfindung ist das Polymer mit mindestens zwei aromatischen Aldimingruppen abgeleitet von einem Isocyanatgruppen-haltigen Polymer, dessen Isocyanatgruppen mit einem Aldimin der Formel (IV) umgesetzt sind,

HO-A-N=CH-Z (IV)

wobei A für einen zweiwertigen aliphatischen, cycloaliphatischen oder arylaliphatischen, gegebenenfalls Ether-Sauerstoff aufweisenden Kohlenwasserstoff-Rest mit 2 bis 12 C-Atomen steht und Z die bereits genannten Bedeutungen aufweist.

Ein solches Polymer enthält schliesslich mindestens zwei aromatische Aldimingruppen der Formel

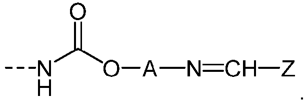

Bevorzugt steht A für 3-Oxa-1,5-pentylen, 3,6-Dioxa-1,8-octylen oder (1,5,5-Trimethylcyclohexan-1-yl)methan-1,3, insbesondere für 3-Oxa-1,5-pentylen.

Besonders geeignet als Aldimin der Formel (IV) ist N-Benzyliden-2-(2-amino-ethoxy)ethanol oder entsprechende Verbindungen abgeleitet von 4-Tolualdehyd, 4-Isopropylbenzaldehyd, Furfural oder 5-Methylfurfural anstelle von Benzaldehyd.

In einer weiteren bevorzugten Ausführungsform der Erfindung ist das Polymer mit mindestens zwei aromatischen Aldimingruppen abgeleitet von einem Isocyanatgruppen-haltigen Polymer, dessen Isocyanatgruppen mit einem Aldimin der Formel (V) umgesetzt sind,

HO-G-CH=N-R¹ (V)

wobei G und R¹ die bereits genannten Bedeutungen aufweisen.

Ein solches Polymer enthält schliesslich mindestens zwei aromatische Aldimingruppen der Formel

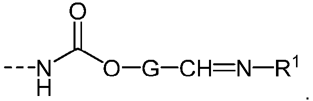

Ebenfalls möglich ist die Umsetzung eines Isocyanatgruppen-haltigen Polymers mit einem Aldehyd der Formel HO-G-CH=O , gefolgt von der Umsetzung mit einem primären Amin der Formel R¹-NH₂ unter Freisetzung von Wasser.

Als Aldehyd der Formel HO-G-CH=O geeignet ist insbesondere 5-Hydroxymethylfurfural oder ethoxylierter Salicylaldehyd, insbesondere 5-Hydroxymethylfurfural.

Als Isocyanatgruppen-haltiges Polymer für die genannten Umsetzungen geeignet ist insbesondere ein Umsetzungsprodukt von mindestens einem monomeren Diisocyanat mit mindestens einem polymeren Polyol in einem NCO/OH-Verhältnis von mindestens 1.5/1, bevorzugt mindestens 1.8/1.

Als monomeres Diisocyanat geeignet ist insbesondere 1,5-Pentandiisocyanat (PDI), 1,6-Hexandiisocyanat (HDI), 2,2(4),4-Trimethyl-1,6-hexandiisocyanat (TMDI), 1-Methyl-2,4(6)-diisocyanatocyclohexan (H₆TDI), Isophorondiisocyanat (IPDI), 4,4'-Diisocyanatodicyclohexylmethan (H₁₂MDI), 4(2),4'-Diphenylmethandiisocyanat (MDI) oder 2,4(6)-Toluendiisocyanat (TDI), insbesondere IPDI.

Als polymeres Polyol geeignet sind insbesondere Polyetherpolyole mit einer OH-Zahl von 9 bis 114 mg KOH/g, bevorzugt 12 bis 57 mg KOH/g, insbesondere 18 bis 45 mg KOH/g, insbesondere Poly(oxy-1,2-propylen)diole, Poly(oxy-1,2-propylen)triole, Ethylenoxid-terminierte Poly(oxy-1,2-propylen)diole oder Ethylenoxid-terminierte Poly(oxy-1,2-propylen)triole.

Das Isocyanatgruppen-haltige Polymer hat bevorzugt einen NCO-Gehalt bezogen auf das Isocyanatgruppen-haltige Polymer von 0.6 bis 6 Gewichts-%, bevorzugt 0.9 bis 3.5 Gewichts-%, insbesondere 1.3 bis 2.7 Gewichts-%.

Die Verbindung mit mindestens zwei Ketoestergruppen der Formel (I) und einem Ketoester-Equivalentgewicht von 114 bis 1'700 g/eq ist bevorzugt ausgewählt aus der Liste bestehend aus 2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, 3-Methyl-1,5-pentandioldiacetoacetat, 2-Ethyl-1,3-hexandioldiacetoacetat, Isosorbid-diacetoacetat, 4,4'-Isopropyliden-bis(cyclohexanol)diacetoacetat, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat, propoxyliertem 1,1,1-Trimethylolpropan mit insgesamt einem mittleren Molekulargewicht Mₙ von 500 bis 750 g/mol, Poly(oxy-1,2-propylen)diol-diacetoacetat mit mittleren Molekulargewicht Mₙ von 500 bis 3'400 g/mol, Poly-(oxy-1,2-propylen)triol-triacetoacetat mit mittleren Molekulargewicht Mₙ von 750 bis 1'300 g/mol und Poly(oxy-1,2-propylen)(oxy-1,2-ethylen)triol-triacetoacetat mit mittleren Molekulargewicht Mₙ von 1'000 bis 5'000 g/mol.

Die härtbare Zusammensetzung kann zusätzlich weitere Bestandteile enthalten, insbesondere
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, gemahlene Füllstoffe aus landwirtschaftlichen Quellen wie insbesondere Olivenkernmehl oder Nussschalenmehl, Metall-Pulver, beispielsweise von Aluminium, Kupfer, Eisen, Silber oder Stahl, PVC-Pulver oder organische oder anorganische Hohlkugeln,
- Fasern, insbesondere Glasfasern, Kohlefasern, Metallfasern, Keramikfasern, Hanffasern, Zellulosefasern oder Kunststofffasern wie Polyamidfasern, Polyesterfasern, Polyethylenfasern oder Polypropylenfasern,
- Nanofüllstoffe oder Nanofasern wie Graphen oder Carbon Nanotubes,
- Farbstoffe,
- Pigmente, insbesondere Titandioxid, Chromoxid, Eisenoxide oder organische Pigmente,
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicar-boxylat, Isophthalate, Trimellitate, Adipate, insbesondere Dioctyladipat (DOA), Azelate, Sebacate, Citrate, Benzoate, Glycolether, Glycolester, Weichmacher mit Polyetherstruktur, insbesondere Poly(oxy-1,2-propylen)-monole, -diole oder -triole, gegebenenfalls mit blockierten Hydroxylgruppen, insbesondere in der Form von Acetylgruppen, sowie organische Sulfonate oder Phosphate, insbesondere Diphenylkresylphosphat (DPK) oder Tris-2-ethyl-hexylphosphat (TOF), Polybutene, Polyisobutene, Kohlenwasserstoffharze oder von natürlichen Fetten oder Ölen abgeleitete Weichmacher, insbesondere epoxidiertes Soja-oder Leinöl oder Rapsölmethylester, wobei Phthalate, hydrierte Phthalate, Adipate oder Weichmacher mit Polyetherstruktur bevorzugt sind,
- Verdünner wie insbesondere Benzylalkohol, 2-Phenoxyethanol, 2-Benzyloxyethanol, phenolgruppenhaltige aromatische Kohlenwasserstoffharze, Diisopropylnaphthalin, Isopropylbiphenyle oder hochsiedende aliphatische Kohlenwasserstoffe,
- Lösemittel,
- Rheologie-Modifizierer, insbesondere Harnstoffverbindungen, Schichtsilikate wie Bentonite, Derivate von natürlich vorkommenden Ölen wie Rizinusöl, hydriertes Rizinusöl, Polyamide, Polyurethane, pyrogene Kieselsäuren oder hydrophob modifizierte Polyoxyethylene,
- Haftvermittler, insbesondere Titanate oder Organoalkoxysilane wie Aminosilane, Mercaptosilane, Epoxysilane, (Meth)acrylsilane, Carbamatosilane, Alkylsilane, S-(Alkylcarbonyl)mercaptosilane oder oligomere Formen dieser Silane,
- flammhemmende Substanzen, insbesondere die bereits genannten Füllstoffe Aluminiumhydroxid oder Magnesiumhydroxid, organische Phosphorsäureester, Ammoniumpolyphosphate, expandierender Graphit, Melaminverbindungen, Borverbindungen oder Antimonverbindungen,
- oberflächenaktive Additive, insbesondere Netzmittel, Verlaufmittel, Entschäumer oder Entlüfter,
- Stabilisatoren gegen Oxidation, Wärme, Licht oder UV-Strahlung oder Biozide, sowie weitere üblicherweise in härtbaren Zusammensetzungen eingesetzte Substanzen.

Bevorzugt enthält die härtbare Zusammensetzung mindestens einen weiteren Bestandteil ausgewählt aus Füllstoffen, Pigmenten, Weichmachern, Verdünnern und oberflächenaktiven Additiven.

Bevorzugt umfasst die härtbare Zusammensetzung zwei Komponenten, welche voneinander getrennt hergestellt und verpackt sind. Dabei sind Verbindungen mit Ketoestergruppen der Formel (I) Bestandteil der ersten Komponente und Verbindungen mit aromatischen Aldimingruppen Bestandteil der zweiten Komponente. Die Carbonsäure **CA** kann als Bestandteil der ersten und/oder der zweiten Komponente oder als Bestandteil einer separaten, dritten Komponente vorliegen. Weitere Inhaltsstoffe der härtbaren Zusammensetzung können als Bestandteil der ersten und/oder der zweiten Komponente oder als Bestandteil einer gegebenenfalls vorhandenen weiteren Komponente vorliegen, wobei mit Ketoestergruppen der Formel (I) reaktive Bestandteile bevorzugt Bestandteil der zweiten Komponente sind, und mit aromatischen Aldimingruppen reaktive Bestandteile bevorzugt Bestandteil der ersten Komponente sind.

Die Komponenten werden getrennt voneinander hergestellt und aufbewahrt. Zur Herstellung werden die Inhaltsstoffe der jeweiligen Komponente miteinander vermischt, so dass eine makroskopisch homogene Masse entsteht.

Die erste und die zweite Komponente werden in Bezug auf ihre Konsistenz bevorzugt so eingestellt, dass sie bei Umgebungsbedingungen mit einfachen Verfahren gut, d.h. möglichst schnell und vollständig, miteinander vermischt werden können. Bevorzugt sind die erste und die zweite Komponente flüssig oder pastös. Jede Komponente ist in einer geeigneten Verpackung für sich allein lagerstabil. Geeignete Gebinde sind insbesondere Fässer, Container, Hobbocks, Eimer, Kanister, Dosen, Beutel, Schlauchbeutel, Kartuschen oder Tuben.

Zur Verwendung der härtbaren Zusammensetzung werden die Komponenten kurz vor oder während der Applikation miteinander vermischt. Das Mischungsverhältnis wird dabei bevorzugt so gewählt, dass das Verhältnis der Anzahl Ketoestergruppen der Formel (I) zur Anzahl aromatische Aldimingruppen im bevorzugten Bereich liegt. In Gewichtsteilen liegt das Mischungsverhältnis zwischen der ersten und der zweiten Komponente typischerweise bei etwa 100:1 bis 1:100, insbesondere 50:1 bis 1:50.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und dem damit verbundenen Anstieg der Viskosität zu Störungen wie beispielsweise einem ungenügenden Applizierbarkeit, optischen Defekten oder einer verlangsamten oder unvollständigen Haftung zum Substrat kommen kann. Insbesondere soll die Offenzeit der Zusammensetzung während der Applikation nicht überschritten werden.

Als "Offenzeit" wird die Zeitspanne zwischen dem Vermischen der Komponenten und dem Ende eines für die Verarbeitung geeigneten Zustands der Zusammensetzung bezeichnet.

Das Vermischen erfolgt bevorzugt bei Umgebungstemperatur, bevorzugt bei einer Temperatur im Bereich von -5 bis 50 °C, bevorzugt 0 bis 40 °C, insbesondere 5 bis 35 °C.

Mit dem Vermischen der Inhaltsstoffe bzw. der Komponenten beginnt die Zusammensetzung durch die einsetzende chemische Reaktion auszuhärten. Dabei reagieren Verbindungen mit Ketoestergruppen der Formel (I) mit aromatischen Aldimingruppen. Es kann vermutet werden, dass typischerweise zwei Ketoestergruppen mit einer Aldimingruppe unter Freisetzung von Wasser zu einer cyclischen Struktureinheit reagieren. Dabei wird kein Aldehyd freigesetzt. Auch Aldimine abgeleitet von Benzaldehyd verursachen somit bei der Aushärtung keinen Geruch nach Benzaldehyd. Die Carbonsäure **CA** bewirkt eine Beschleunigung der Aushärtung.

Die Aushärtung erfolgt bevorzugt bei Umgebungstemperatur, bevorzugt bei einer Temperatur im Bereich von -5 bis 50°C, insbesondere 0 bis 40°C.

Ein weiterer Gegenstand der Erfindung ist die ausgehärtete Zusammensetzung, erhalten aus der beschriebenen Verwendung nach dem Vermischen der Bestandteile oder Komponenten der härtbaren Zusammensetzung.

Bevorzugt hat die ausgehärtete Zusammensetzung eine Bruchdehnung von mindestens 10 %, insbesondere mindestens 20 %, bestimmt gemäss DIN EN 53504 bei einer Zuggeschwindigkeit von 200 mm/min mit hantelförmigen Prüfkörpern mit einer Dicke von 2 mm und einer Länge von 75 mm bei einer Steglänge von 30 mm und einer Stegbreite von 4 mm.

Bei Verwendung von höhermolekularen Polymeren mit Ketoestergruppen der Formel (I) oder aromatischen Aldimingruppen kann die Bruchdehnung auch wesentlich höher sein, insbesondere mindestens 50 %, mindestens 100 % oder mindestens 200 %.

Die härtbare Zusammensetzung ist besonders geeignet als Beschichtung oder Klebstoff, insbesondere für Beschichtungen oder Verklebungen im Bereich von Bauwerken des Hoch- oder Tiefbaus, Brücken, Dächern oder Fassaden, oder für Verklebungen oder Beschichtungen im Bereich von Rohren, Rotorblättern von Windkraftanlagen, Fenstern, Haushaltsgeräten oder Verkehrsmitteln wie insbesondere Automobilen, Bussen, Lastkraftwagen, Schienenfahrzeugen, Schiffen, Flugzeugen oder Helikoptern oder Anbauteilen davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1 °C und eine relative Luftfeuchtigkeit von 50±5 % bezeichnet.

Die verwendeten Chemikalien wurden, sofern nicht anders bezeichnet, von Merck oder ihrer Tochterunternehmen bezogen.

### Herstellung von Polymeren oder Verbindungen mit Ketoestergruppen:

### Polymer P1:

480 g (2 mol OH) Rizinusöl-basiertes Polyol (Setathane^{®} D 1145, OH-Zahl 234 mg KOH/g, von Allnex) wurde mit 286.3 g (2.2 mol) Ethylacetoacetat und 0.8 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurde eine klare, gelbliche Flüssigkeit mit einem theoretischen Acetoacetat-Equivalentgewicht von 324 g/eq.

### Polymer P2:

50 g (0.49 mol OH) eines Polyoxypropylentriols (Desmophen^{®} 4011 T, OH-Zahl 550 mg KOH/g, propoxyliertes 1,1,1-Trimethylolpropan, von Covestro) wurde mit 67 g (0.52 mol) Ethylacetoacetat und 0.1 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurde eine klare, farblose Flüssigkeit mit einem theoretischen Acetoacetat-Equivalentgewicht von 186 g/eq.

### Polymer P3:

500 g (1.1 mol OH) amorphes Dimerfettsäure-basiertes Polyesterdiol mit OH-Zahl 123 mg KOH/g wurde mit 156.2 g (1.2 mol) Ethylacetoacetat und 0.6 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurde eine klare, gelbliche Flüssigkeit mit einem theoretischen Acetoacetat-Equivalentgewicht von 540 g/eq.

### Verbindung V1:

118.2 g (1 mol) 3-Methyl-1,5-pentandiol wurde mit 286.3 g (2.2 mol) Ethylacetoacetat und 0.3 g Tetra-n-butyltitanat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurde 3-Methyl-1,5-pentandioldiacetoacetat als klare, gelbliche Flüssigkeit mit einem theoretischen Acetoacetat-Equivalentgewicht von 143 g/eq.

### Herstellung von Verbindungen oder Polymeren mit Aldimingruppen:

### Aldimin-1:

212.2 g (2 mol) Benzaldehyd wurde unter Stickstoffatmosphäre vorgelegt, unter gutem Rühren und Kühlung mit 158.3 g (1 mol) 2,2(4),4-Trimethyl-1,6-hexandiamin (Vestamin^{®} TMD, von Evonik) versetzt und anschliessend die flüchtigen Bestandteile bei 90 °C und 10 mbar Vakuum entfernt. Erhalten wurde N,N'-Di-benzyliden-2,2(4),4-trimethyl-1,6-hexandiamin als klare, gelbliche Flüssigkeit mit einem theoretischen Aldimin-Equivalentgewicht von 170 g/eq.

### Polymer A1:

400 g (171 mmol NCO-Gruppen) eines Isocyanat-funktionellen Polymers mit einem NCO-Gehalt von 1.8 Gewichts-%, hergestellt wie nachfolgend beschrieben, wurde in Gegenwart von 0.1 g Dibutylzinndilaurat unter Ausschluss von Feuchtigkeit bei 80 °C mit 34.6 g (179 mmol) N-Benzyliden-2-(2-aminoethoxy)ethanol, hergestellt wie nachfolgend beschrieben, umgesetzt, bis mittels IR-Spektroskopie keine Isocyanatgruppen mehr nachweisbar waren. Erhalten wurde ein bei Raumtemperatur flüssiges, Aldimin-funktionelles Polymer mit einem theoretischen Aldimin-Equivalentgewicht von 2428 g/eq.

Das Isocyanat-funktionelle Polymer wurde hergestellt, indem 780 g Ethylenoxidterminiertes Polyoxypropylentriol (Desmophen^{®} 5031 BT, OH-Zahl 28.0 mg KOH/g, von Covestro) und 303 g Isophorondiisocyanat (Vestanat^{®} IPDI, von Evonik) bei 80 °C nach bekanntem Verfahren zu einer Reaktionsmischung mit einem NCO-Gehalt von 9.1 Gewichts-% umgesetzt und anschliessend die flüchtigen Bestandteile, insbesondere nicht umgesetztes Isophorondiisocyanat, in einem Kurzwegverdampfer destillativ entfernt wurden. Erhalten wurde ein bei Raumtemperatur flüssiges Polymer mit einem NCO-Gehalt von 1.8 Gewichts-%.

N-Benzyliden-2-(2-aminoethoxy)ethanol wurde hergestellt, indem 105.0 g (1 mol) 2-(2-Aminoethoxy)ethanol (Diglycolamine^{®} Agent, von Huntsman) mit 106.1 g (1 mol) Benzaldehyd versetzt und anschliessend die flüchtigen Bestandteile bei 80 °C und 10 mbar Vakuum entfernt wurden. Erhalten wurde N-Benzyliden-2-(2-aminoethoxy)ethanol als klare, gelbliche Flüssigkeit.

### Eingesetzte Sustanzen als Beschleuniger:

| | |
|---|---|
| **B1**: | Lävulinsäure (primäre aliphatische Carbonsäure) |
| **B2**: | Heptansäure (primäre aliphatische Carbonsäure) |
| **B3**: | Milchsäure (sekundäre aliphatische Carbonsäure) |
| **B4:** | p-Aminobenzoesäure |
| **B5**: | Neodecansäure (tertiäre aliphatische Carbonsäure) |
| **B6**: | Benzoesäure |
| **B7**: | Salicylsäure |
| **B8**: | Bis(2-ethylhexyl)phosphorsäure |
| **B9**: | Methansulfonsäure |
| **B10**: | Dibutylzinndilaurat |
| **B11**: | Octa-Soligen^{®} Zirconium 18HS (von Milliken) |
| **B12**: | Octa-Soligen^{®} Zinc 8 (von Milliken) |
| **B13**: | Borchers^{®} Deca Lithium 2 (von Milliken) |

### Herstellung von härtbaren Zusammensetzungen:

### Zusammensetzungen Z-1 bis Z-14: (geeignet als zähelastische Beschichtungen oder Klebstoffe)

Für jede Zusammensetzung wurden die in Tabelle 1 angegebenen Inhaltsstoffe der Komponente **K1** in den angegebenen Mengen (in Gewichtsteilen) vermischt und in einem verschlossenen Gebinde aufbewahrt. Im Fall eines bei Raumtemperatur festen Beschleunigers wurde dieser mittels zugeführter Wärme in der Komponente **K1** gelöst.

Als Komponente **K2** wurde die in Tabelle 1 angegebene Menge (in Gewichtsteilen) Aldimin-**1** eingesetzt.

Anschliessend wurden die Komponenten **K1** und **K2** jeder Zusammensetzung mittels eines Zentrifugalmischers (Thinky ARE-250, 2000 U/min, 60 s) vermischt und wie folgt beschrieben geprüft.

Die **Gelierzeit** (Zeitspanne zwischen dem Vermischen der Komponenten und der Gelierung) wurde bestimmt, indem 10 g der vermischten Zusammensetzung mittels eines Spatels in regelmässigen Zeitabständen bewegt wurden, bis die Masse gelierte.

Zur Bestimmung der mechanischen Eigenschaften wurde die vermischte Zusammensetzung auf eine PTFE-beschichteten Folie zu einem Film von 2 mm Dicke ausgegossen, dieser durch Lagerung während 7 Tagen im Normklima ausgehärtet, einige hantelförmige Prüfkörper (Länge 75 mm, Steglänge 30 mm, Stegbreite 4 mm) aus dem Film gestanzt und diese gemäss DIN EN 53504 bei einer Zuggeschwindigkeit von 200 mm/min auf **Zugfestigkeit, Bruchdehnung** und **E-Modul 5** % (zwischen 0.5-5 % Dehnung) geprüft.

Weiter wurden einige Prüfkörper zur Bestimmung des **Weiterreisswiderstandes** aus dem Film von 2 mm Dicke ausgestanzt und gemäss DIN ISO 34-1, Verfahren B (winkelförmiger Prüfkörper) bei einer Zuggeschwindigkeit von 500 mm/min geprüft.

Die **Shore** Härte wurde gemäss DIN 53505 an zylindrischen Prüfkörpern (Durchmesser 20 mm, Dicke 5 mm) geprüft. Entweder nach einer Lagerzeit von 7 Tagen im Normklima **(7d NK),** oder nach 7 Tagen im Normklima gefolgt von 7 Tagen bei 70 °C und 100 % relativer Feuchtigkeit gefolgt von 7 Tagen im Normklima **(+7d 70/100 + 7d NK),** oder nach 7 Tagen im Normklima gefolgt von 7 Tagen bei 80 °C gefolgt von 1 Tag im Normklima **(+7d 80°C** + **1d NK).**

### Die Resultate sind in Tabelle 1 angegeben.

Die mit "**(Ref.)**" bezeichneten Zusammensetzungen sind Vergleichsbeispiele.

**Tabelle 1: Zusammensetzung und Eigenschafter von Z-1 bis Z-14.**

| **Zusammensetzung** | | **Z-1 (Ref.)** | **Z-2** | **Z-3** | **Z-4** | **Z-5** | **Z-6 (Ref.)** | **Z-7 (Ref.)** |
|---|---|---|---|---|---|---|---|---|
| **Komponente K1:** | | | | | | | | |
| Polymer **P1** | | 65.5 | 65.5 | 65.5 | 65.5 | 65.5 | 65.5 | 65.5 |
| Verbindung **V1** | | 32.5 | 32.5 | 32.5 | 32.5 | 32.5 | 32.5 | 32.5 |
| Beschleuniger | | - | **B1** | **B2** | **B3** | **B4** | **B5** | **B6** |
| | | | 2.0 | 2.0 | 2.0 | 2.0 | 2.0 | 2.0 |

| **Komponente K2:** | | | | | | | | |
|---|---|---|---|---|---|---|---|---|
| | Aldimin-1 | 28.4 | 28.4 | 28.4 | 28.4 | 28.4 | 28.4 | 28.4 |
| Gelierzeit [h:min] | | 3:10 | 2:0 | 2:05 | 2:45 | 2:40 | 2:05 | 1:40 |
| Zugfestigkeit [MPa] | | 30.4 | 31.2 | 29.2 | 33.4 | 34.2 | 30.5 | n.b. |
| Bruchdehnung [%] | | 30 | 28 | 46 | 24 | 22 | 23 | |
| E-Modul 5% [MPa] | | 640 | 693 | 626 | 737 | 752 | 652 | |
| Weiterreisswiderstand [N/mm] | | 26 | 26 | n.b. | n.b. | 28 | 31 | n.b. |
| Shore D | (7d NK) | 74 | 73 | 70 | 63 | 74 | 72 | 71 |
| | (+7d 70/100 +7d NK)) | 71 | 63 | 58 | 64 | 55 | 62 | 62 |
| | (+7d 80 °C +1d NK) | 71 | 64 | 68 | 64 | 67 | n.m.¹ | n.m.¹ |

| | | | | | | | | |
|---|---|---|---|---|---|---|---|---|
| ¹ nicht messbar, sehr viele Blasen "n.b." steht für "nicht bestimmt" | | | | | | | | |

**Tabelle 1: (Fortsetzung)**

| **Zusammensetzung** | | **Z-8 (Ref.)** | **Z-9 (Ref.)** | **Z-10 (Ref.)** | **Z-11 (Ref.)** | **Z-12 (Ref.)** | **Z-13 (Ref.)** | **Z-14 (Ref.)** |
|---|---|---|---|---|---|---|---|---|
| **Komponente K1:** | | | | | | | | |
| Polymer **P1** | | 65.5 | 65.5 | 65.5 | 65.5 | 65.5 | 65.5 | 65.5 |
| Verbindung **V1** | | 32.5 | 32.5 | 32.5 | 32.5 | 32.5 | 32.5 | 32.5 |
| Beschleuniger | | **B7** | **B8** | **B9** | **B10** | **B11** | **B12** | **B13** |
| | | 2.0 | 2.0 | 2.0 | 2.0 | 2.0 | 2.0 | 2.0 |

| **Komponente K2:** | | | | | | | | |
|---|---|---|---|---|---|---|---|---|
| | Aldimin-1 | 28.4 | 28.4 | 28.4 | 28.4 | 28.4 | 28.4 | 28.4 |
| Gelierzeit [h:min] | | 2:20 | >3h | >3h | >3h | >3h | > 3 h | > 3 h |
| Zugfestigkeit [MPa] | | n.b. | n.b. | n.b. | n.b. | n.b. | n.b. | n.b. |
| Bruchdehnung [%] | | | | | | | | |
| E-Modul 5% [MPa] | | | | | | | | |
| Weiterreisswiderstand [N/mm] | | n.b. | n.b. | n.b. | n.b. | n.b. | n.b. | n.b. |
| Shore D | (7d NK) | 70 | n.b. | n.b. | n.b. | n.b. | n.b. | n.b. |
| | (7d 70/100) | 61 | | | | | | |
| | (7d 80 °C) | n.m.¹ | | | | | | |

Aus der Tabelle 1 ist ersichtlich, dass die erfindungsgemässen Beschleuniger **B1** bis **B4** eine schnellere Gelierzeit als die Referenz-Zusammensetzung **Z1** ohne Beschleuniger ermöglichten, und nach 7 Tagen Lagerung bei 80 °C eines ausgehärteten Prüfkörpers keine Blasen auftraten. Die nicht-erfindungsgemässen Beschleuniger **B5** bis **B13** zeigten viele Blasen nach Lagerung eines ausgehärteten Prüfkörpers während 7 Tagen bei 80 °C, oder sie zeigten keine beschleunigende Wirkung auf die Aushärtung.

### Zusammensetzungen Z-15 bis Z-18: (geeignet als elastische Klebstoffe oder Dichtstoffe)

Für jede Zusammensetzung wurden die in Tabelle 2 angegebenen Inhaltsstoffe der Komponente **K1** in den angegebenen Mengen (in Gewichtsteilen) mittels eines Zentrifugalmischers (Thinky ARE-250, 2000 U/min, 60 s) vermischt und in einem verschlossenen Gebinde aufbewahrt.

Weiterhin wurden die in Tabelle 2 angegebenen Inhaltsstoffe der Komponente **K2** in den angegebenen Mengen (in Gewichtsteilen) vermischt und in einem verschlossenen Gebinde aufbewahrt.

Anschliessend wurden die Komponenten **K1** und **K2** jeder Zusammensetzung mittels des Zentrifugalmischers vermischt und wie folgt beschrieben geprüft.

Die **Tack Free Time** (Zeit bis zur Klebefreiheit) wurde bestimmt, indem 20 g der vermischten Zusammensetzung in einer Schichtdicke von ca. 2 mm auf Pappkarton aufgetragen und im Normklima die Zeitdauer bestimmt wurde, bis beim leichten Antippen der Oberfläche der applizierten Zusammensetzung mittels einer Pipette aus LDPE erstmals keine Rückstände auf der Pipette mehr zurückblieben. Zur Bestimmung der mechanischen Eigenschaften wurde die vermischte Zusammensetzung auf einem silikonbeschichteten Trennpapier zu einem Film von 2 mm Dicke aufgebracht, dieser während 7 Tagen im Normklima aushärten lassen und wie für Zusammensetzung **Z1** beschrieben die **Zugfestigkeit, Bruchdehnung, E-Modul 5%** (bei 0.5-5% Dehnung) und **E-Modul 50%** (bei 0.5-50% Dehnung) geprüft.

Der **Weiterreisswiderstand** wurde wie für Zusammensetzung **Z1** beschrieben geprüft.

Die **Shore** Härte wurde wie für Zusammensetzung **Z1** beschrieben geprüft. Nach der Lagerung für 7 Tagen bei 70 °C und 100 % relativer Feuchtigkeit wurden die Prüfkörper jedoch nur 1 Tag anstelle von 7 Tagen im Normklima aufbewahrt **(+7d 70/100 +1d NK).** Und anstelle einer Lagerung für 7 Tage bei 80 °C wurden die Prüfkörper während 7 Tage bei 100 °C gelagert **(+7d100°C +1d NK).**

Die Resultate sind in Tabelle 2 angegeben.

Die mit "**(Ref.)**" bezeichneten Zusammensetzungen sind Vergleichsbeispiele.

**Tabelle 2: Zusammensetzung und Eigenschaften von Z-15 bis Z-18.**

| **Zusammensetzung** | | **Z-15 (Ref.)** | **Z-16** | **Z-17** | **Z-18 (Ref.)** |
|---|---|---|---|---|---|
| **Komponente K1:** | | | | | |
| | Polymer **A1** | 30.0 | 30.0 | 30.0 | 30.0 |
| Diisodecylphthalat | | 20.0 | 20.0 | 20.0 | 20.0 |
| | CaCO₃ gefällt¹ | 30.0 | 30.0 | 30.0 | 30.0 |
| | Russ ² | 10.0 | 10.0 | 10.0 | 10.0 |
| Beschleuniger | | - | **B1** | **B2** | **B12** |
| | | | 0.5 | 0.5 | 0.5 |

| **Komponente K2:** | | | | | |
|---|---|---|---|---|---|
| | Polymer **P2** | 3.4 | 3.4 | 3.4 | 3.4 |
| | Polymer **P3** | 3.4 | 3.4 | 3.4 | 3.4 |
| Tack Free Time [h:min] | | 3:35 | 0:25 | 0:40 | 3:25 |
| Zugfestigkeit [MPa] | | 4.8 | 5.7 | 5.0 | 5.0 |
| Bruchdehnung [%] | | 310 | 385 | 350 | 350 |
| E-Modul 5% [MPa] | | 3.7 | 2.8 | 3.0 | 3.3 |
| E-Modul 50% [MPa] | | 2.1 | 1.7 | 1.7 | 1.8 |
| Weiterreisswiderstand [N/mm] | | 8.6 | 8.8 | 6.0 | 7.0 |
| Shore A | (7d NK) | 50 | 49 | 49 | 52 |
| (+7d 70/100 +1d NK) | | 36 | 30 | 36 | 38 |
| (+7d 100°C + 1d NK) | | 65 | 61 | 61 | 63 |

| | | | | | |
|---|---|---|---|---|---|
| ¹ Socal^{®} U1S2 (von Imerys) ² Monarch^{®} 570 (von Cabot) | | | | | |

## Patentansprüche

1. Verwendung einer Carbonsäure CA, ausgewählt aus primären aliphatischen Carbonsäuren, sekundären aliphatischen Carbonsäuren und Aminobenzoesäuren, als Beschleuniger für die Aushärtung einer härtbaren Zusammensetzung enthaltend Ketoestergruppen der Formel (I) und aromatische Aldimingruppen, 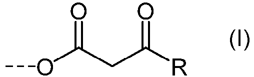 wobei R für einen einwertigen Kohlenwasserstoffrest mit 1 bis 6 C-Atomen steht.

2. Verwendung gemäss Anspruch 1, **dadurch gekennzeichnet, dass** die Carbonsäure **CA** 2 bis 20 C-Atome und gegebenenfalls Heteroatome aufweist.

3. Verwendung gemäss Anspruch 1 oder 2, **dadurch gekennzeichnet, dass** die Carbonsäure **CA** ausgewählt ist aus der Liste bestehend aus Milchsäure, Lävulinsäure, Heptansäure, Octansäure, Nonansäure, Decansäure, Undecansäure, Laurinsäure, Stearinsäure, Isostearinsäure und 4-Aminobenzoesäure.

4. Verwendung gemäss einem der Ansprüche 1 bis 3, **dadurch gekennzeichnet**, die Carbonsäure **CA** Lävulinsäure ist.

5. Verwendung gemäss einem der Ansprüche 1 bis 4, **dadurch gekennzeichnet, dass** die Carbonsäure **CA** in der härtbaren Zusammensetzung in einer Menge von 0.1 bis 10, bevorzugt 0.5 bis 5, insbesondere 1 bis 3, Gewichtsteile Carbonsäure **CA** bezogen auf 100 Gewichtsteile der Summe aller Bestandteile mit aromatischen Aldimingruppen und mit Ketoestergruppen der Formel (I) eingesetzt wird.

6. Verwendung gemäss einem der Ansprüche 1 bis 5, **dadurch gekennzeichnet, dass** R für Methyl steht und die Ketoestergruppen der Formel (I) somit Acetoacetatgruppen sind.

7. Verwendung gemäss einem der Ansprüche 1 bis 6, **dadurch gekennzeichnet, dass** die aromatischen Aldimingruppen Aldimingruppen der Formel (II) sind, 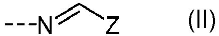 wobei Z für einen aromatischen oder heteroaromatischen fünf- oder sechsgliedrigen Ring steht, der gegebenenfalls substituiert und/oder anelliert ist und insgesamt 4 bis 25 C-Atome umfasst.

8. Verwendung gemäss einem der Ansprüche 1 bis 7, **dadurch gekennzeichnet, dass** die härtbare Zusammensetzung Verbindungen mit mindestens zwei Ketoestergruppen der Formel (I) und Verbindungen mit mindestens zwei aromatischen Aldimingruppen umfasst.

9. Verwendung gemäss einem der Ansprüche 1 bis 8, **dadurch gekennzeichnet, dass** das Verhältnis der Anzahl Ketoestergruppen der Formel (I) zur Anzahl aromatische Aldimingruppen in der härtbaren Zusammensetzung im Bereich von 1 bis 4, bevorzugt 1.5 bis 3, insbesondere 1.8 bis 2.7, liegt.

10. Verwendung gemäss einem der Ansprüche 1 bis 9, **dadurch gekennzeichnet, dass** die härtbare Zusammensetzung mindestens ein Polymer mit einem mittleren Molekulargewicht Mₙ von 800 bis 20'000 g/mol umfasst, wobei das Polymer mindestens zwei Ketoestergruppen der Formel (I) oder mindestens zwei aromatischen Aldimingruppen enthält.

11. Verwendung gemäss einem der Ansprüche 1 bis 10, **dadurch gekennzeichnet, dass** die härtbare Zusammensetzung
- mindestens ein Polymer mit mindestens zwei Ketoestergruppen der Formel (I) und einem Ketoester-Equivalentgewicht von mindestens 340 g/eq, und
- mindestens eine Verbindung mit mindestens zwei aromatischen Aldimingruppen und einem Aldimin-Equivalentgewicht von 111 bis 350 g/eq umfasst.

12. Verwendung gemäss einem der Ansprüche 1 bis 10, **dadurch gekennzeichnet, dass** die härtbare Zusammensetzung
- mindestens ein Polymer mit mindestens zwei aromatischen Aldimingruppen und einem Aldimin-Equivalentgewicht von mindestens 600 g/eq, und
- mindestens eine Verbindung mit mindestens zwei Ketoestergruppen der Formel (I) und einem Ketoester-Equivalentgewicht von 114 bis 1'700 g/eq umfasst.

13. Verwendung gemäss einem der Ansprüche 1 bis 12, **dadurch gekennzeichnet, dass** die härtbare Zusammensetzung mindestens einen weiteren Bestandteil ausgewählt aus Füllstoffen, Pigmenten, Weichmachern, Verdünnern und oberflächenaktiven Additiven enthält.

14. Ausgehärtete Zusammensetzung erhalten aus der Verwendung gemäss einem der Ansprüche 1 bis 13 nach dem Vermischen der Bestandteile oder Komponenten der härtbaren Zusammensetzung.

15. Ausgehärtete Zusammensetzung gemäss Anspruch 14, **dadurch gekennzeichnet, dass** die Bruchdehnung mindestens 10 %, insbesondere mindestens 20 %, beträgt, bestimmt gemäss DIN EN 53504 bei einer Zuggeschwindigkeit von 200 mm/min mit hantelförmigen Prüfkörpern mit einer Dicke von 2 mm und einer Länge von 75 mm bei einer Steglänge von 30 mm und einer Stegbreite von 4 mm.
